# EUROPEAN PATENT SPECIFICATION

(11) **EP 2 987 409 B1**
(45) Date of publication and mention of the grant of the patent: **24.10.2018**
(21) Application number: 14770794.7
(22) Date of filing: 14.03.2014
(51) Int. Cl.: A01N 59/16, A01N 63/02, A01P 3/00, A01N 59/00

(54) **PLANT PROTECTION AGENT AND METHOD FOR CONTROLLING PLANT DISEASE**
PFLANZENSCHUTZMITTEL UND VERFAHREN ZUR BEKÄMPFUNG VON PFLANZENBEFALL
AGENT DE PROTECTION DES PLANTES ET PROCÉDÉ DE LUTTE CONTRE UNE MALADIE DES PLANTES

(30) Priority: 19.03.2013 JP 2013056674
(43) Date of publication of application: 24.02.2016
(73) Proprietor: National University Corporation Okayama University, Okayama-shi, Okayama 700-8530 (JP)
(72) Inventor: SHIRAISHI, Tomonori, Okayama-shi Okayama 700-8530 (JP); TOYODA, Kazuhiro, Okayama-shi Okayama 700-8530 (JP); TAKADA, Jun, Okayama-shi Okayama 700-8530 (JP); KUNOH, Hitoshi, Okayama-shi Okayama 700-8530 (JP)
(74) Representative: Vossius & Partner Patentanwälte Rechtsanwälte mbB
(86) International application number: PCT/JP2014/056963
(87) International publication number: WO 2014/148396

(56) References cited:
- WO-A1-97/47201
- WO-A1-2011/074587
- JP-A- 2000 044 414
- JP-A- 2003 137 703
- US-A1- 2012 248 368
- MINGDA LIU ET AL: "Effect of Silicon on Phosphorus Adsorption of Two Synthetic Iron Oxides", ADVANCED MATERIALS RESEARCH, vol. 726-731, 16 August 2013 (2013-08-16), pages 325-330, XP055298208, DOI: 10.4028/www.scientific.net/AMR.726-731.325
- T. SUZUKI ET AL: "Silicon and Phosphorus Linkage with Iron via Oxygen in the Amorphous Matrix of Gallionella ferruginea Stalks", APPLIED AND ENVIRONMENTAL MICROBIOLOGY, vol. 78, no. 1, 1 January 2012 (2012-01-01), pages 236-241, XP055298679, US ISSN: 0099-2240, DOI: 10.1128/AEM.05913-11
- Jonas Van Bockhaven ET AL: "Towards establishing broad-spectrum disease resistance in plants: silicon leads the way", Journal of Experimental Botany, 18 December 2012 (2012-12-18), pages 1281-1293, XP055298294, Retrieved from the Internet: URL:http://jxb.oxfordjournals.org/content/ 64/5/1281.full.pdf [retrieved on 2016-08-29]
- DATABASE WPI Week 200019 Thomson Scientific, London, GB; AN 2000-217890 XP002761247, -& JP 2000 044414 A (TAKI CHEM CO LTD) 15 February 2000 (2000-02-15)
- THE JAPANESE SOCIETY FOR HORTICULTURAL SCIENCE CHU SHIKOKU SHIBU KENKYU HAPPYO YOSHI no. 49, 2010, page 21, XP008181913
- HORTICULTURAL RESEARCH ( JAPAN) vol. 11+2, 2012, page 198, XP008181171

## Description

### Technical Field

The present invention relates to a method for controlling plant diseases using a plant protection agent, as further defined in the claims.

### Background Art

As existing plant protection techniques associated with microorganisms, microbial pesticides using soil microorganisms or plant-endogenous microorganisms are well known, and some of them are commercially available. Almost 20 microbial pesticides have been put on the market so far; generally, however, problems such as difficulty in storage and handling are pointed out. Moreover, the microbial pesticides are unable to exhibit sufficient capacity in an environment rich in various microorganisms or under stress, and it is difficult to eliminate the possibilities that that they produce toxic metabolites under stress.

Aggregates and biomats composed of iron hydroxides etc. are formed in nature. These are well known as iron rust on corroded pipes. Such conglomerates contain a large amount of so-called microorganism-derived iron oxides (hereinafter also referred to as "BIOX") in the form of ribbons or microtubes, which have attracted attention as next-generation functional materials that can be produced at low energy and low cost. Bacteria belonging to *Leptothrix* sp., *Sphaerotilus* sp., *Gallionella* sp., *Siderocapsa* sp., etc., are known to be involved in the formation of iron oxides. It is ascertained that microtubular iron oxides (L-BIOX) are formed by *Leptothrix* bacteria.

However, naturally occurring biomats are generally produced by aggregates of various microorganisms. Consequently, it is difficult to obtain uniform BIOX, thus causing an obstacle to industrial use. Furthermore, it was difficult to isolate L-BIOX-producing *Leptothrix*; even if isolation was successful, it was extremely difficult to maintain the *Leptothrix* itself or the ability to produce L-BIOX. However, these problems were solved by Sawayama et al. in 2011. Specifically, they succeeded in the isolation of a *Leptothrix cholodnii* OUMS1 strain (hereinafter also simply referred to as "OUMS1") closely related to the L. *cholodnii* SP6 strain (L33974), and in the production of L-BIOX using OUMS1 (PTL 1 and NPL 1). OUMS1 has thus far maintained the ability to produce L-BIOX over three years. For example, PTL 2 to PTL 4 have reported the following as methods for using such microorganism-derived iron oxides.

PTL 2 has reported that an organic-inorganic composite material chemically modified with an organic group is obtained by chemically treating a microorganism-derived ceramic material, and that the organic group introduced into the organic-inorganic composite material can be used to fix a catalyst etc.

PTL 3 has reported that a magnetic ceramic material having specific properties is obtained by heating a microorganism-derived ceramic material.

PTL 4 has reported that amorphous silica can be obtained by treating iron in an iron oxide produced by a microorganism with an acid to dissolve and remove Fe components, and that the amorphous silica has an acid site to act as a solid acid catalyst, and has more excellent acid strength and catalytic activity than those of artificially synthesized silica catalysts.

However, there have been no examples or reports thus far, including in PTL 1 to PTL 4, relating to the prevention of plant infection using iron oxides derived from microorganisms.

Moreover, PTL 5 relates to a plant-protecting agent containing (A) a soluble aluminum or iron compound, and (B) a silicic acid-based fine powder or an alumina-based fine powder.

NPL 2 describes the degree of crystallinity of extracellular stalks consisting of iron-oxide-encrusted inorganic/organic fibers produced by *Gallionella* sp. and examines the chemical linkages of constituent elements in the stalk fibers.

### Citation List

### Patent Literature

PTL 1: WO2011/074586
PTL 2: WO2010/110435
PTL 3: WO2011/074587
PTL 4: WO2012/124703
PTL 5: JP2000-044414A

### Non-patent Literature

NPL 1: Sawayama et al., Curr. Microbiol. (2011) 63:173-180
NPL 2: Suzuki et al., Appl. Environ. Microbiol. (2012) 78:236-241

### Summary of Invention

### Technical Problem

An object of the present invention is to provide a plant protection agent that is easy to handle, can be stably stored, and can be used stably and safely, and to provide a method for controlling plant diseases using the plant protection agent.

### Solution to Problem

The present inventors examined the possibility of the use of L-BIOX produced by OUMS1 (hereinafter also referred to as "OUMS1-BIOX") for the protection of crops (plants). As a result, it was found that OUMS1-BIOX had almost no direct antibacterial properties or cytotoxicity, and was safe. It was also found that OUMS1-BIOX had an activity of significantly preventing invasion of disease germs, and an activity of inducing resistance to plants.

The present invention has been completed by conducting further studies based on these findings. The present invention provides the following use of an amorphous and/or microcrystalline silicon- and phosphorus-containing iron oxide as a plant protection agent and the following method for controlling plant diseases.

### (I) Plant Protection Agent

(I-1) Use of an amorphous and/or microcrystalline silicon- and phosphorus-containing iron oxide as a plant protection agent, wherein the iron oxide is an iron oxide produced by an iron-oxidizing bacterium.
(I-2) The use as a plant protection agent according to (I-1), wherein the iron oxide comprises iron and oxygen as main components, and has an elemental ratio of iron, silicon, and phosphorus of 66-87:2-27:1-32 by atomic percent, with the proviso that the total of iron, silicon, and phosphorus by atomic percent is taken as 100.
(I-3) The use as a plant protection agent according to (I-1) or (I-2), wherein the iron oxide further comprises 0.1 to 5 wt.% of carbon.
(I-4) The use as a plant protection agent according to any one of (I-1) to (I-3), wherein the microcrystalline iron oxide is silicon- and phosphorus-containing ferrihydrite and/or lepidocrocite.
(I-5) The use as a plant protection agent according to any one of (I-1) to (I-4), wherein the iron oxide is an iron oxide separated from an aggregated precipitate produced in a water purification method using iron bacteria.
(I-6) The use as a plant protection agent according to any one of (I-1) to (I-5), wherein the iron-oxidizing bacterium is a bacterium belonging to *Leptothrix* sp. and/or *Gallionella* sp.
(I-7) The use as a plant protection agent according to any one of (I-1) to (I-5), wherein the iron-oxidizing bacterium is *Leptothrix cholodnii* OUMS1 (NITE BP-860).
(I-8) The use as a plant protection agent according to any one of (I-1) to (I-7), wherein the plant protection agent comprises a supernatant separated from a suspension of an iron oxide produced by an iron-oxidizing bacterium and water.
(I-9) The use as a plant protection agent according to any one of (I-1) to (I-8), wherein the plant protection agent has a wettable powder form.
(I-10) The use as a plant protection agent according to any one of (I-1) to (I-8), wherein the plant protection agent has a dusting powder form.

### (II) Method for Controlling Plant Diseases

(II-1) A method for controlling plant diseases, comprising the step of applying a plant protection agent as defined in any one of (I-1) to (I-10).

### Advantageous Effects of Invention

The plant protection agent to be used in accordance with the present invention has almost no direct antibacterial properties or cytotoxicity, and is a safe material. Further, the plant protection agent has an activity of significantly preventing invasion of disease germs when it is applied to plants.

Moreover, the plant protection agent to be used in accordance with the present invention can induce resistance via a plurality of paths to plants. This indicates the capability of the plant protection agent to target disease germs that attempt to invade plants. There is a high value in terms of safety. This also indicates the effectiveness of the plant protection agent for various pathogens. Since there are many sites of action, the appearance of resistant bacteria is likely avoidable.

Conventional microbial pesticides generally have problems such as difficulty in storage and handling; however, the plant protection agent to be used in accordance with the present invention is easy to handle, and can be stably stored. Moreover, conventional microbial pesticide are unable to exhibit sufficient capacity under stress in the presence of various microorganisms, and it is difficult to eliminate the possibilities that they produce toxic metabolites; however, the plant protection agent to be used in accordance with the present invention does not have such problems, and can be used stably and safely.

The present invention leads the way to effective use of BIOX, the treatment of which is problematic in drinking-water purification facilities. The present invention provides a technique that leads the way to effective use of waste in drinking-water facilities by a utilizing method not possible by existing techniques.

### Brief Description of Drawings

Fig. 1 shows microphotographs showing the germination of gray mold conidia on glass slides. A, B, C, and D show OUMS1-BIOX at 0, 27, 133, and 667 µg/ml, respectively. ap: appressorium; gt: germ tube; s: pycniospore. Bar: 50 µm.
Fig. 2 shows microphotographs showing the germination of pea mycosphaerella blight pycniospores on glass slides. A, B, C, and D show OUMS1-BIOX at 0, 27, 133, and 667 µg/ml, respectively. gt: germ tube; s: pycniospore. Bar: 50 µm.
Fig. 3 shows graphs showing the germination rate of gray mold conidia and pea mycosphaerella blight pycniospores treated with OUMS1-BIOX on glass slides. The final concentrations are one-third of the concentrations shown in the graphs.
Fig. 4 shows microphotographs showing the morphogenesis of the gray mold fungus on ethanol-treated onion epidermis. Bar: 30 µm. a: appressorium; gt: germ tube; ih: invading hypha; s: conidium.
Fig. 5 is a graph showing the invasion rate of the gray mold fungus into onion epidermal cells. The different alphabets indicate significant differences.
Fig. 6 is a photograph showing the effect of OUMS1-BIOX on mycosphaerella blight infection in pea leaves.
Fig. 7 shows a graph showing the expression of protection-related genes in OUMS1-BIOX-treated *Arabidopsis thaliana* (Col-0). H: healthy leaf; W: water-treated leaf; Biox: OUMS1-BIOX-treated leaf. PAD3: camalexin (antimicrobial low-molecular substance) biosynthesis gene; PR1: salicylic acid signal transduction system gene; AtGSTU11: glutathione S-transferase gene.
Fig. 8 shows the effect of natural BIOXs on invasion of the mycosphaerella blight fungus into onion epidermal cells. The prepared natural BIOXs were derived from a water purification tank in the Faculty of Agriculture at Okayama University, and from a purification plant in Joyo City, Kyoto. H₂O: water treatment; Ou-Biox: prepared natural BIOX derived from a water purification tank in the Faculty of Agriculture at Okayama University; Kyoto Biox: prepared natural BIOX derived from a purification plant in Joyo City, Kyoto. ***: significant difference at p<0.001

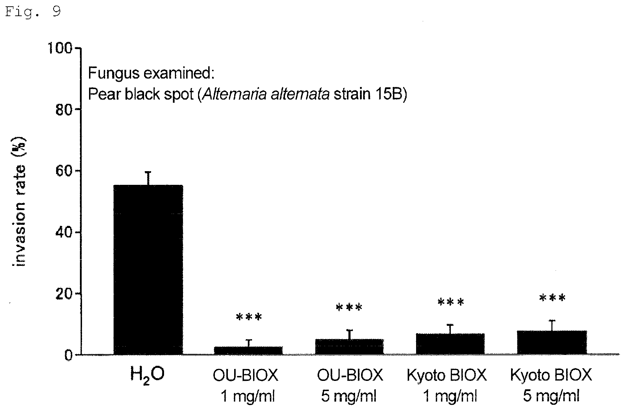

Fig. 9 shows the effect of natural BIOXs on invasion of a black spot fungus into onion epidermal cells. The prepared natural BIOXs were derived from a water purification tank in the Faculty of Agriculture at Okayama University, and from a purification plant in Joyo City, Kyoto. The graph shows the invasion rate of black spot conidia treated with BIOXs at 1 mg/ml and 5 mg/ml. H₂O: water treatment; Ou-Biox: prepared natural BIOX derived from a water purification tank in the Faculty of Agriculture at Okayama University; Kyoto Biox: prepared natural BIOX derived from a purification plant in Joyo City, Kyoto. ***: significant difference at p<0.001

### Description of Embodiments

The present invention is described in detail below.

The plant protection agent to be used in accordance with the present invention is characterized in that it comprises an amorphous and/or microcrystalline silicon- and phosphorus-containing iron oxide, wherein the iron oxide is an iron oxide produced by an iron-oxidizing bacterium.

It is desirable that the iron oxide of the present invention comprises iron and oxygen as main components, and has an elemental ratio of iron, silicon, and phosphorus of 66-87:2-27:1-32, preferably 70-75:5-15:5-20, by atomic percent, with the proviso that the total of iron, silicon, and phosphorus by atomic percent is taken as 100.

When the iron oxide of the present invention is a microcrystalline iron oxide, the microcrystalline iron oxide is preferably silicon- and phosphorus-containing ferrihydrite and/or lepidocrocite.

Ferrihydrite refers to a low-crystalline iron oxide and is called 2-line ferrihydrite, 6-line ferrihydrite, etc., depending on the number of peaks appearing in X-ray diffraction pattern. The composition of 2-line ferrihydrite is Fe₄(O,OH,H₂O), and the composition of 6-line ferrihydrite is Fe_{4.6}(O,OH,H₂O)₁₂ (R.A. Eggleton and R.W. Fitzpatrick, "New data and a revised structural model for ferrihydrite," Clays and Clay Minerals, Vol. 36, No. 2, pages 111-124, 1988).

Lepidocrocite is a crystalline iron oxide represented by the chemical formula of γ-FeOOH and having the following properties. Crystal system: orthorhombic system, space group: Bb mm, lattice constant: a = 0.3071, b = 1.2520, c = 0.3873 Å, and α = β = γ = 90°.

The iron oxide of the present invention is an iron oxide produced by an iron-oxidizing bacterium.

### Iron Oxide Prepared by Using Synthetic Method (Reference)

Disclosed herein is also a plant protection agent comprising an amorphous and/or microcrystalline silicon- and phosphorus-containing iron oxide, wherein the iron oxide is an iron oxide prepared by using a synthetic method.

Examples of methods for synthesizing the iron oxide include a reaction of an iron compound, a silicon compound, and a phosphorus compound performed in the following manner.

An iron compound, a silicon compound, and a phosphorus compound are dissolved in a solvent at a given ratio, and an aqueous alkaline solution (e.g., ammonia, sodium hydroxide, potassium hydroxide, or calcium carbonate) is added dropwise thereto under stirring to adjust the pH to about 10. The obtained precipitate is washed with distilled water, collected by centrifugation, and dried under reduced pressure, followed by pulverization to prepare a silicon- and phosphorus-containing iron oxide.

Specific examples of the iron compound include iron nitrate, iron sulfate, iron chloride, or iron carbonate. Of these, iron nitrate is preferable.

Specific examples of the silicon compound include sodium silicate or potassium silicate.

Specific examples of the phosphorus compound include phosphoric acid, sodium phosphate, or potassium phosphate.

Examples of a medium with which the iron compound etc. are reacted include aqueous solutions or alcohols, with aqueous solutions being preferable.

The reaction is performed at a temperature of 10 to 50°C, and preferably 20 to 30°C.

### Iron Oxide Produced by Iron-Oxidizing Bacterium (Biogenous Iron Oxide)

As explained above, the plant protection agent to be used in accordance with the present invention comprises an amorphous and/or microcrystalline silicon- and phosphorus-containing iron oxide, wherein the iron oxide is an iron oxide produced by an iron-oxidizing bacterium.

The iron-oxidizing bacterium is not particularly limited as long as it forms an amorphous and/or microcrystalline silicon- and phosphorus-containing iron oxide. Examples of iron-oxidizing bacteria include *Toxothrix* sp., *Leptothrix* sp., *Crenothrix* sp., *Clonothrix* sp., *Gallionella* sp., *Siderocapsa* sp., *Siderococcus* sp., *Sideromonas* sp., or *Planktomyces* sp.

*Leptothrix ochracea* belonging to *Leptothrix* sp. is capable of producing biogenous iron oxide with a hollow fibrous sheath structure. *Gallionella ferruginea* belonging to *Gallionella* sp. is capable of producing helical biogenous iron oxide.

Moreover, *Clonothrix* sp. bacteria are known to produce branched tubular or thread-shaped biogenous iron oxide; *Toxothrix* sp. bacteria are known to produce thread-shaped (harp-shaped, pie wedge-shaped) biogenous iron oxide; *Sideromonas* sp. bacteria are known to produce short trunk-shaped biogenous iron oxide; *Siderocapsa* sp. bacteria are known to produce capsule-shaped biogenous iron oxide; and *Siderococcus* sp. bacteria are known to produce spherical biogenous iron oxide (see, for example, edited by Sadao Kojima, Ryuichi Sudo, and Mitsuo Chihara "Environmental Microorganism Pictorial Book," Kodansha, Ltd. (1995)).

The size of the biogenous iron oxide varies depending on the kind of material, and is generally about 0.1 to 3,000 µm. More specifically, sheath-shaped, helical, branched tubular, thread-shaped, and short trunk-shaped biogenous iron oxides generally have a diameter of about 0.1 to 5 µm and a length of about 5 to 3,000 µm. Capsule-shaped biogenous iron oxides generally have a length of about 1.2 to 24 µm. Spherical biogenous iron oxides generally have a diameter of about 0.1 to 1 µm.

Iron oxide produced by iron-oxidizing bacteria, such as bacteria belonging to *Leptothrix* sp., is generally amorphous iron oxide.

A *Leptothrix cholodnii* OUMS1 strain is one example of *Leptothrix* sp bacteria. The *Leptothrix cholodnii* OUMS1 strain was deposited on December 25, 2009, as Accession No. NITE P-860 in the National Institute of Technology and Evaluation, Patent Microorganisms Depositary (Kazusa Kamatari 2-5-8, Kisarazu, Chiba, 292-0818, Japan). This bacterial strain has been transferred to the international deposit under Accession No. NITE BP-860.

The iron oxide produced by the *Leptothrix cholodnii* OUMS1 strain has a ferrihydrite or lepidocrocite structure, and is an aggregate of ferrihydrite nanoparticles or lepidocrocite nanoparticles. The primary particle diameter of ferrihydrite nanoparticles is preferably about 3 to 5 nm, and the primary particle diameter of lepidocrocite nanoparticles is preferably about 30 to 50 nm.

The biogenous iron oxide produced by *Leptothrix cholodnii* may be in the shape of, for example, a microtube, a nanotube, a hollow string, a capsule, a string-and-sphere agglomerate, a string, or a rod. The size of these biogenous iron oxides is preferably as follows. Microtubular biogenous iron oxide: diameter of 0.3 to 4 µm, length of 5 to 200 µm; nanotubular biogenous iron oxide: diameter of 300 to 450 nm, length of 5 to 200 µm; hollow string-shaped biogenous iron oxide: length of 3 to 10 µm; capsule-shaped biogenous iron oxide: major axis of 0.5 to 7 µm, minor axis of 0.5 to 3 µm; thread-shaped biogenous iron oxide: length of 0.5 to 5 µm; and rod-shaped biogenous iron oxide: length of 5 to 30 µm.

There is no particular limitation to the method for obtaining biogenous iron oxide, and various methods can be used. Examples of the method for obtaining biogenous iron oxide include a method for obtaining biogenous iron oxide from an aggregated precipitate produced in a biological water purification method (water purification method using iron bacteria) or produced by iron-oxidizing bacteria present in a water purification plant (see JP2005-272251A); the method disclosed in JPH10-338526A, which is for producing pipe-shaped particulate iron oxides; and other methods. Further explanations of these methods can be found in the aforementioned documents.

In contrast to a rapid-filtration water purification method, which removes impurities from raw water by means of only an aggregation effect of polyaluminum chloride (PAC) or another flocculant, the "water purification method using iron bacteria" removes impurities by means of the cleaning action of microorganisms. Examples of methods for removing impurities by means of the cleaning action of microorganisms include a method for removing impurities by causing impurities in raw water to aggregate and precipitate by using the aggregation action of microorganisms, such as iron-oxidizing bacteria. The method is not particularly limited as long as water purification is performed by microorganisms. The method may be what is referred to as the slow-speed filtration water purification method (natural filtration method), which only involves forming a microorganism film on the surface of a sand layer and filtering raw water through the sand layer, or the medium-speed filtration water purification method, which involves washing a filter layer to prevent the filter layer from being blocked so that the filtration rate is maintained.

Among the iron-oxidizing bacteria used in the water purification method using iron bacteria, in particular, *Leptothrix* sp. bacteria, are predominant bacteria on the filter layer used in the water purification method using iron bacteria, and mainly produce biogenous iron oxide with a hollow fibrous sheath structure. The present inventors have confirmed that biogenous iron oxides with a hollow fibrous sheath structure produced by *Leptothrix* sp. bacteria have excellent properties in that they each have a hollow with an internal diameter of about 1.0 µm and an outer diameter of about 1.2 µm, and are almost uniform particles.

In the present invention, the definition of the expression "water purification method using iron bacteria" includes the meaning of a phenomenon that involves removing iron ions etc. from raw water by causing the iron ions etc. in raw water to aggregate by using the action described above. The definition of "water purification method using iron bacteria" does not only include the meaning of implementation of water purification for the purpose of only purifying water on a practical scale, but also includes the meaning of implementation of water purification on a small scale, such as a laboratory scale.

The biogenous iron oxide usable in the present invention may preferably be biogenous iron oxide separated from an aggregated precipitate produced in the water purification method using iron bacteria. The method for separating biogenous iron oxide is not particularly limited as long as biogenous iron oxide can be separated from an aggregated precipitate. The method may be performed in an easy way by causing a suspension of the aggregated precipitate above to pass through, for example, a sieve, a mesh, a filter, or a drainboard-like net used in paper milling, with a pore size (mesh size) that allows only impurities but not biogenous iron oxide.

The aggregated precipitate is produced in the water purification method using iron bacteria in such a manner that iron ions etc. in raw water are aggregated by means of the aggregation action of iron-oxidizing bacteria and precipitated as clusters. However, the aggregated precipitate as used herein is sufficient if the impurities in raw water are aggregated by means of the aggregation action of iron-oxidizing bacteria, and an aggregate that is not particularly sedimented (precipitated) may also be used as the aggregated precipitate. Specifically, the aggregated precipitate as used herein may be in a floating state in water, etc., or in a suspension state in which the precipitate is resuspended after washing, etc. The precipitate may also be in a dry state in which moisture is evaporated from the precipitate.

The method for obtaining an aggregated precipitate is not particularly limited. A precipitate may be collected from a precipitate deposited on a filter layer used in a water purification plant. Backwash water (wash water) used in a slow-speed (or medium-speed) filtration water purification method may also be used. It is also possible to use a filtration residue separately filtered off by a filtration device, and a precipitate obtained by centrifugation. Further, decantation may be carried out to obtain an aggregated precipitate that is naturally sedimented.

A method for obtaining biogenous iron oxide from an aggregated precipitate produced by iron-oxidizing bacteria present in a water purification plant etc. is described below. First, a precipitate is collected, the precipitate being formed by iron-oxidizing bacteria (e.g., *Leptothrix ochracea* (hereinafter appropriately referred to as "L. *ochracea*"), which belongs to *Leptothrix* sp.) present in a water purification plant that uses a natural filtration method etc. The constituent element ratio, the structure, etc., of biogenous iron oxide obtained from the precipitate formed by *L*. *ochracea* vary depending on, for example, the water quality and the temperature of the environment where the iron-oxidizing bacterium survives. However, there is no limitation as long as *L*. *ochracea* can produce a precipitate, and biogenous iron oxide having a hollow fibrous sheath structure as its main structure can be obtained.

Subsequently, the precipitate is washed. The liquid used for washing is not particularly limited, and distilled water is preferably used. Then, sand and other impurities are further removed from the washed sludge by using a sieve. In this manner, biogenous iron oxide can be obtained. The obtained biogenous iron oxide may be sorted by specific gravity by centrifugal separation, if necessary.

A pipe-shaped iron oxide can also be obtained by using the method for producing pipe-shaped particulate iron oxides disclosed in JPH10-338526A.

The structure of the biogenous iron oxide produced by an iron-oxidizing bacterium varies depending on the iron-oxidizing bacterium used for the production and the conditions for the production. The produced biogenous iron oxide has a hollow fibrous sheath structure, a helical shape, a grain shape, and/or a thread shape. For example, the majority of biogenous iron oxide may have a hollow fibrous sheath structure or may have a grain shape, depending on the water purification plant from which the sludge is collected.

However, any iron oxide may be used as the plant protection agent in accordance with the present invention, regardless of whether it has a hollow fibrous sheath structure, helical shape, grain shape, or thread shape, as described above, or a combination of any two or more thereof, as long as the iron oxide is produced by an iron-oxidizing bacterium.

Regarding the constituent elements of the biogenous iron oxide, the biogenous iron oxide comprises iron and oxygen as main components, and further comprises silicon and phosphorus. The biogenous iron oxide may further comprise carbon in an amount of 0.1 to 5 wt%, in particular 0.2 to 2 wt%. This composition suitably varies depending on the environment, etc., in which iron-oxidizing bacteria are present. Thus, biogenous iron oxide is different in terms of composition from synthesized iron oxides, such as 2-line ferrihydrite, which do not comprise phosphorus or silicon. Further, the measurement results of samples by SEM reveal that each constituent element is uniformly distributed in biogenous iron oxide.

When an iron oxide produced by an iron-oxidizing bacterium is used in the present invention, a supernatant separated from a suspension of the iron oxide and water may be used as a component of the plant protection agent. For example, water is added to a dry preparation of an iron oxide produced by an iron-oxidizing bacterium, followed by ultrasonication to prepare a colloid-like solution, and only the supernatant in which the iron oxide is dispersed in water is used as a component of the plant protection agent.

As shown in Examples provided later, the iron oxide of the present invention has almost no direct antibacterial properties or cytotoxicity, and is a safe material. Further, the iron oxide of the present invention has an activity of significantly preventing invasion of disease germs when it is applied to plants.

Moreover, the iron oxide of the present invention can induce resistance via a plurality of paths to plants, as shown in Examples provided later. This indicates the capability of targeting disease germs that attempt to invade plants. There is a high value in terms of safety. This also indicates the effectiveness of the iron oxide for various pathogens. Since there are many sites of action, the appearance of resistant bacteria is likely avoidable.

Furthermore, the iron oxide of the present invention has a feature in that it is easy to handle, can be stably stored, and can be used stably and safely, in contrast to conventional microbial pesticides.

In consideration of the effects exhibited by the above iron oxide, the plant protection agent to be used in accordance with the present invention can also be called a plant disease control composition.

As components other than the iron oxide, the plant protection agent to be used in accordance with the present invention can suitably contain, if necessary, a support, surfactant, wetting agent, preservative, binder, stabilizer, coloring agent, emulsifier, dispersant, penetrant, thickener, antifoaming agent, etc. Moreover, the plant protection agent to be used in accordance with the present invention may be suitably formulated, for example, into a wettable powder, granule wettable powder, flowable agent, emulsion, dusting powder, dust formulation, aerosol, paste agent, suspension, or solution, by a known method. The plant protection agent may be used as it is, or used after dilution with a diluent to a predetermined concentration. Although the iron oxide content of the plant protection agent to be used in accordance with the present invention is not particularly limited as long as the effect of the present invention is obtained, the content is preferably 0.003 to 99 wt.%, more preferably 0.013 to 95 wt.%, and even more preferably 0.067 to 90 wt.%. In addition to the iron oxide, the plant protection agent to be used in accordance with the present invention may further contain a pesticide, such as an insecticide, miticide, or herbicide.

The method for applying the plant protection agent in accordance with the present invention is not particularly limited as long as the effect of the present invention is obtained. Examples thereof include spraying to plants, spraying on the soil surface, injection into the soil, blasting to plant seeds, smearing to plant seeds, or immersion of plants seeds.

The amount of the plant protection agent to be applied in accordance with the invention can be suitably selected depending on the target disease, target plant, dosage form, degree of occurrence of disease, application method, etc.

Examples of plants targeted by the plant protection agent to be used in accordance with the present invention include, but are not limited thereto, rice, wheat, barley, pea, onion, corn, grape, apple, pear, peach, persimmon, citrus, soybean, strawberry, kidney bean, potato, cabbage, lettuce, tomato, cucumber, sugar beet, spinach, eggplant, watermelon, pumpkin, sugarcane, green pepper, sugar beet, sweet potato, taro, cotton, sunflower, tulip, or chrysanthemum.

Examples of plant diseases targeted by the plant protection agent to be used in accordance with the present invention include, in particular, the following plant diseases:
gray mold (*Botrytis cinerea*) of tomato, cucumber, legumes, strawberry, potato, cabbage, eggplant, lettuce, etc.;
stem rot (*Sclerotinia sclerotiorum*) of tomato, cucumber, legumes, strawberry, potato, rapeseed, cabbage, eggplant, lettuce, etc.;
damping-off (*Rhizoctonia* spp., *Pythium* spp., *Fusarium* spp., *Phythophthora* spp., *Sclerotinia sclerotiorum,* etc.) of various vegetables, such as tomato, cucumber, legumes, radish, watermelon, eggplant, rapeseed, green pepper, spinach, and sugar beet;
downy mildew (*Pseudoperonospora cubensis*), powdery mildew (*Sphaerotheca fuliginea*), anthracnose (*Colletotrichum lagenarium*), gummy stem blight (*Mycosphaerella melonis*), fusarium wilt (*Fusarium oxysporum*), and phytophthora blight (*Phytophthora parasitica, Phytophthora melonis, Phytophthora nicotianae, Phytophthora drechsleri*, *Phytophthora capsici*, etc.) of gourds;
leaf spot (*Alternaria brassicae*) of rapeseed;
leaf spot (*Alternaria brassicae*, etc.), white spot (*Cercosporella brassicae*)*,* blackleg (*Leptospheria maculans*), clubroot (*Plasmodiophora brassicae*), and downy mildew (*Peronospora brassicae*) of brassicaceae vegetables;
purple stain (*Cercospora kikuchii*), sphaceloma scab (*Elsinoe glycinnes*), pod and stem blight (*Diaporthe phaseololum*), Rhizoctonia root rot (*Rhizoctonia solani*), root rot (*Phytophthora megasperma*), downy mildew (*Peronospora manshurica*), rust (*Phakopsora pachyrhizi*), and anthracnose (*Colletotrichum truncatum*) of soybean;
early blight (*Alternaria solani*), leaf mold (*Cladosporium fulvam*), late blight (*Phytophthora infestans*), fusarium wilt (*Fusarium oxysporum*), root rot (*Pythium myriotylum*, *Pythium dissotocum*), and anthracnose (*Colletotrichum phomoides*) of tomato;
anthracnose (*Colletotrichum lindemuthianum*) of kidney bean;
damping-off *(Rhizoctonia solani)* and yellows (*Fusarium oxysporum*) of cabbage;
bottom rot *(Rhizoctonia solani)* and yellows (*Verticillium dahlie*) of Chinese cabbage;
rust (*Puccinia allii*), purple blotch (*Alternaria porri*), southern blight (*Sclerotium rolfsii. Sclerotium rolfsii*), and white tip disease (*Phytophthora porri*) of welsh onion;
powdery mildew (*Sphaerotheca fuliginea*, etc.), leaf mold (*Mycovellosiella nattrassii*), late blight (*Phytophthora infestans*), and brown rot (*Phytophthora capsici*) of eggplant;
leaf spot (*Mycosphaerella personatum*) and brown leaf spot (*Cercospora arachidicola*) of peanut;
powdery mildew (*Erysiphe pisi*), downy mildew (*Peronospora pisi*), and mycosphaerella blight (*Mycosphaerella pinodes*) of pea;
downy mildew (*Peronospora viciae*) and phytophthora rot (*Phytophthora nicotianae*) of broad bean;
early blight (*Alternaria solani*), black scurf *(Rhizoctonia solani),* late blight (*Phytophthora infestans*), silver scurf (*Spondylocladium atrovirens*), dry rot (*Fusarium oxysporum*, *Fusarium solani*), and powdery scab (*Spongospora subterranea*) of potato;
powdery mildew (*Sphaerotheca humuli*), phytophthora rot (*Phytophthora nicotianae*), anthracnose (*Gromerella cingulata*), and fruit rot (*Pythium ultimum* Trow var. *ultimum*) of strawberry;
downy mildew (*Plasmopora viticola*), rust (*Phakopsora ampelopsidis*), powdery mildew (*Uncinula necator*), anthracnose (*Elsinoe ampelina*), ripe rot (*Glomerella cingulata*), black rot (*Guignardia bidwellii*), dead arm (*Phomopsis viticola*), flyspeck (*Zygophiala jamaicensis*), gray mold (*Botrytis cinerea*), bud blight (*Diaporthe medusaea*), violet root rot (*Helicobasidium mompa*), and white root rot (*Rosellinia necatrix*) of grape;
powdery mildew (*Podosphaera leucotricha*), scab (*Venturia inaequalis*), alternaria blotch (*Alternaria alternata* (apple pathotype)), rust (*Gymnosporangium yamadae*), blossom blight (*Monillia mali*), canker (*Valsa ceratosperma*), ring rot (*Botryosphaeria berengeriana*), bitter rot (*Colletotrichum* acutatum), flyspeck (*Zygophiala jamaicensis*)*,* sooty blotch (*Gloeodes pomigena*), fruit spot (*Mycosphaerella pomi*), violet root rot (*Helicobasidium mompa*), white root rot (*Rosellinia necatrix*), canker (*Phomopsis mali*, *Diaporthe tanakae*), and blotch (*Diplocarpon mali*) of apple;
anthracnose (*Gloeosporium kaki*), leaf spot (*Cercospora kaki*, *Mycosphaerella nawae*), and powdery mildew (*Phyllactinia kakikora*) of persimmon;
scab (*Cladosporium carpophilum*), phomopsis rot (*Phomopsis* sp.), phytophthora rot *(Phytophthora* sp.), and anthracnose (*Gloeosporium laeticolor*) of peach;
anthracnose (*Glomerella cingulata*), young-fruit rot (*Monilinia kusanoi*), and brown rot (*Monilinia fructicola*) of cherry;
purple blotch (*Alternaria alternata* (Japanese pear pathotype)), scab (*Venturia nashicola*), rust (*Gymnosporangium haraeanum*), physalospora canker (*Physalospora piricola*), canker (*Diaporthe medusaea*, *Diaporthe eres*), and crown rot (*Phytophthora cactorum*) of pear;
melanose (*Diaporthe citri*), common green mold (*Penicillium digitatum*), blue mold (*Penicillium italicum*), and scab (*Elsinoe fawcettii*) of citrus;
stem rot (*Sclerotinia sclerotiorum*) of sunflower;
black spot (*Diplocarpon rosae*), powdery mildew (*Sphaerotheca pannosa*), downy mildew (*Peronospora sparsa*), and phytophthora rot (*Phytophthora megasperma*) of rose;
brown spot (*Septoria chrysanthemi-indici*), rust (*Puccinia horiana*), and crown rot (*Phytophthora cactorum*) of chrysanthemum;
blast (*Pyricularia oryze*), sheath blight (*Thanatephorus cucumeris*), brown spot (*Cochliobolus miyabeanus*), bakanae disease (*Gibberella fujikuroi*), seedling blight (*Pythium* spp., *Fusarium* spp., *Trichoderma* spp., *Rhizopus* spp., *Rhizoctonia solani,* etc.), false smut (*Claviceps virens*), and kernel smut (*Tilletia barelayana*) of rice;
powdery mildew (*Erysiphe graminis* f. sp. *hordei*), rust (*Puccinia striiformis*, *Puccinia graminis, Puccinia recondita, Puccinia hordei*), leaf stripe (*Pyrenophora graminea*), net blotch (*Pyrenophora teres*), fusarium head blight (*Fusarium graminearum*, *Fusarium culmorum*, *Fusarium avenaceum*, *Microdochium nivale*), typhula snow blight (*Typhula incarnata*, *Typhula ishikariensis*, *Micronectriella nivalis*), loose smut (*Ustilago nuda*, *Ustilago tritici*, *Ustilago nigra*, *Ustilago avenae*), bunt (*Tilletia caries*, *Tilletia pancicii*), eye spot (*Pseudocercosporella herpotrichoides*), foot-rot (*Rhizoctonia cerealis*), scald (*Rhynchosporium secalis*), leaf blotch (*Septoria tritici*), glume blotch (*Leptosphaeria nodorum*), seedling blight (*Fusarium* spp., *Pythium* spp., *Rhizoctonia* spp., *Septoria nodorum*, *Pyrenophora* spp.), take-all (*Gaeumannomyces graminis*), anthracnose (*Colletotrichum gramaminicola*), ergot (*Claviceps purpurea*), and spot blotch (*Cochliobolus sativus*) of wheat; and
fusarium head blight (*Fusarium graminearum,* etc.), seedling blight (*Fusarium avenaceum*, *Penicillium* spp., *Pythium* spp., *Rhizoctonia* spp.), rust (*Puccinia sorghi*), leaf blight (*Cochliobolus heterostrophus*), smut (*Ustilago maydis*), anthracnose (*Colletotrichum gramaminicola*), and northern leaf spot (*Cochliobolus carbonum*) of corn.

The plant diseases targeted by the plant protection agent to be used in accordance with the present invention are preferably gray mold (*Botrytis cinerea*) and mycosphaerella blight (*Mycosphaerella pinodes*).

### Examples

The present invention is described in more detail below with reference to Examples.

### Production Example 1 (not part of the claimed invention)

### 1. Preparation of OUMS1-BIOX

OUMS1-BIOX was prepared by culturing OUMS1 using the following culture fluid (SIGP medium (Sawayama et al., Curr Microbiol (2011) 63: 173-180)).

Using the elementary composition obtained by ICP analysis of groundwater collected from a water purification plant in Joyo City as an indicator, the following salts were added to 1 L of pure water.
Na₂SiO₃9H₂O: 0.2 g
CaCl₂-2H₂O: 0.044 g
MgSO₄-7H₂O: 0.041 g

Further, the following reagents used in a GPGP medium were added.
Glucose: 1 g (final concentration: 0.1%)
Peptone: 1 g (final concentration: 0.1%)
Na₂HPO₂-12H₂O: 0.076 g
KH₂PO₄-2H₂O: 0.02 g
HEPES: 2.383 g
FeSO₄: 0.05 mmol

After these were sequentially dissolved, the pH was adjusted to 7.0 using an NaOH solution, followed by filtration through a PTFE filter (0.02 µm, millipore) . Then, a 99.9% iron piece (10 x 10 x 1.2 mm, produced by Kojundo Chemical Laboratory Co., Ltd.) was placed, and rotary culture of OUMS1 was performed at 70 rpm at 20°C for 7 days. After the iron piece was removed, the biomat formed on the surface was dried at 60°C for 24 hours, thereby obtaining OUMS1-BIOX.

### 2. Preparation of OUMS1-BIOX Dispersion

A dried preparation (2 mg) of OUMS1-BIOX obtained above was weighed, and 1 ml of distilled water was added thereto, followed by ultrasonication for 20 minutes to prepare a colloid-like solution. Since partial precipitation was observed by this series of operations, only the supernatant in which OUMS1-BIOX was dispersed in water was used in the following Test Examples.

### Test Example 1 (Assay of Antifungal Properties and Cytotoxicity of OUMS1-BIOX)

For the purpose of investigating the possibility of applications for plant protection, the influence of OUMS1-BIOX on the morphogenesis (germination and invasive behavior) of gray mold (*Botrytis cinerea*) and pea mycosphaerella blight (*Mycosphaerella pinodes*) was examined. *Botrytis cinerea* is an important plurivorous plant pathogenic fungus generated during cultivation, distribution, and storage of flowers and vegetables. This fungus easily develops chemical tolerance, and causes serious damage worldwide. Moreover, pea mycosphaerella blight is the most significant pea disease internationally. No species have been found to be completely resistant to this disease.

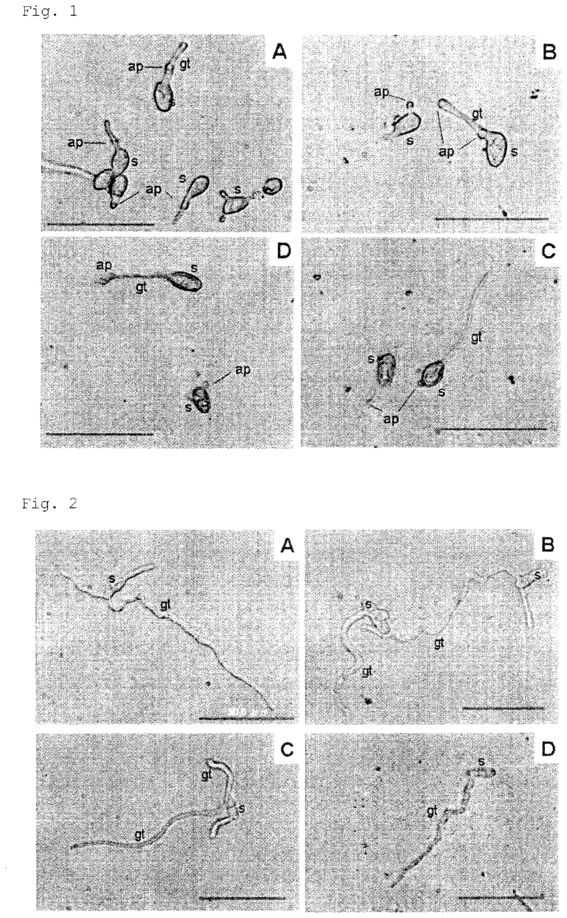

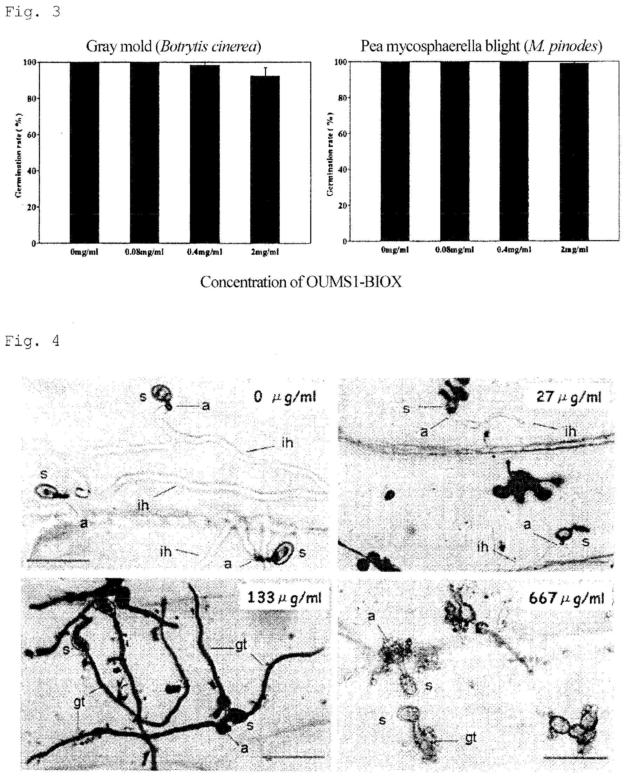

First, the influence of OUMS1-BIOX on the germination of both fungi was examined on glass slides. After 5 µl of OUMS1-BIOX (0, 0.08 mg/ml, 0.40 mg/ml, and 2 mg/ml) was placed on a glass slide, a conidial suspension (10⁵/ml) of 10 µl of gray mold fungus (system R02) or mycosphaerella blight fungus was added thereon, and allowed to stand in a moist chamber at 23°C for 16 hours. Figs. 1 and 2 show images observed by an optical microscope (Olympus IX70-22FL/PH) 16 hours after inoculation, and Fig. 3 shows the germination rate of the gray mold fungus and pea mycosphaerella blight fungus (number of spores forming germ tubes/total number of spores x 100).

The results of the examination confirmed that the germination rate was almost 100% in the treatment sections of 0 to 667 µg/ml, and no significant difference was observed between the treatment sections (Fig. 3). These results suggest that OUMS1-BIOX has almost no direct antibacterial properties or cytotoxicity, and is a very safe material.

### Test Example 2 (Action on Invasive Behavior of Disease Germs)

The influence of OUMS1-BIOX on the germination, appressorium formation, and invasive behavior (penetration) of the gray mold fungus was examined using an onion epidermal model.

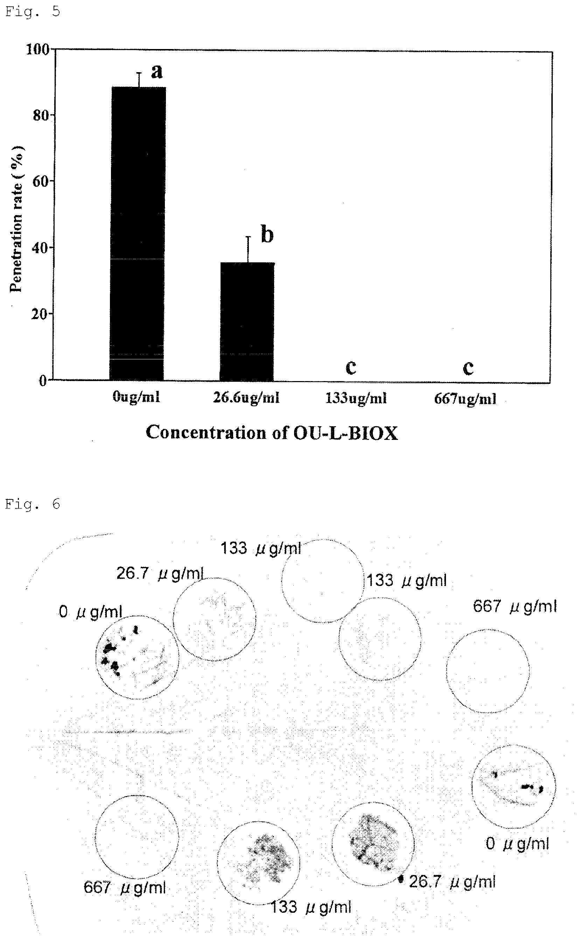

Onion epidermis (1 cm²) was peeled, and a low-molecular antimicrobial substance etc. were removed with 70% ethanol. After washing with water, the resulting product was floated on 100 µl of distilled water placed on a glass slide, and 5 µl of OUMS1-BIOX liquid (0, 0.08, 0.4, and 2 mg/ml) was added thereto. Then, 10 µl of gray mold conidia (10⁵ spores/ml; cultured on a PDA medium at 23°C for one month under a BL lamp) was inoculated at the same location. After being allowed to stand under moist-chamber conditions at 23°C for 18 hours, the resulting product was dyed with cotton blue, and observed by an optical microscope. Fig. 4 shows images observed by the optical microscope, and Fig. 5 shows the invasion rate of the gray mold fungus into onion epidermal cells (number of spores succeeded in invasion/number of spores forming appressorium x 100).

The results of observation confirmed that no significant difference was observed in the germination rate between the treatment sections, as in the experiment on glass slides. The gray mold *Botrytis cinerea* conidia in the water-treatment control section formed appressoria immediately after germination, and promptly invaded the epidermal cells. In contrast, the conidia in the presence of OUMS1-BIOX at 27 µg/ml formed appressoria immediately after germination; however, the invasion rate was significantly suppressed (Fig. 5). Further, it was revealed that the length of the invading hyphae was shorter than that of the water-treatment control section (Fig. 4). In the 133 µg/ml treatment, the germination rate was high, germ tubes were significantly elongated, and appressoria were formed on the germ tubes; however, no invasion was observed (Fig. 4). Thus, it was clarified that OUMS1-BIOX had significant invasion inhibitory activity.

### Test Example 3 (Inoculation Experiment)

The formation of necrotic lesions by the mycosphaerella blight fungus in OUMS1-BIOX-treated pea leaves was examined.

Expanded pea leaves (second to fifth leaves) on the 30th day after seeding were cut, and 5 µl of OUMS1-BIOX prepared at 0, 0.08, 0.4, and 2 mg/ml was added to the leaves. Then, 10 µl of pea mycosphaerella blight fungus (500,000 spores/ml) was immediately inoculated, and the action of OUMS1-BIOX on infection (necrotic lesion formation) 30 hours after inoculation was examined. Fig. 6 shows the results of dyeing with trypan blue in the 30th hour after inoculation.

The results confirmed that the formation of necrotic lesions was suppressed in a concentration-dependent manner. No necrotic lesions were formed in the 667-µg/ml section (Fig. 6). The results of microscope observation showed that although appressoria were formed in the high-concentration OUMS1-BIOX treatment section, the stainability of the cytoplasm was lost (the cell content was expelled). The results suggested the possibility of critically damaging the cell membrane of the invading hyphae.

### Test Example 4 (Induction of Expression of Protection-Related Genes by OUMS1-BIOX)

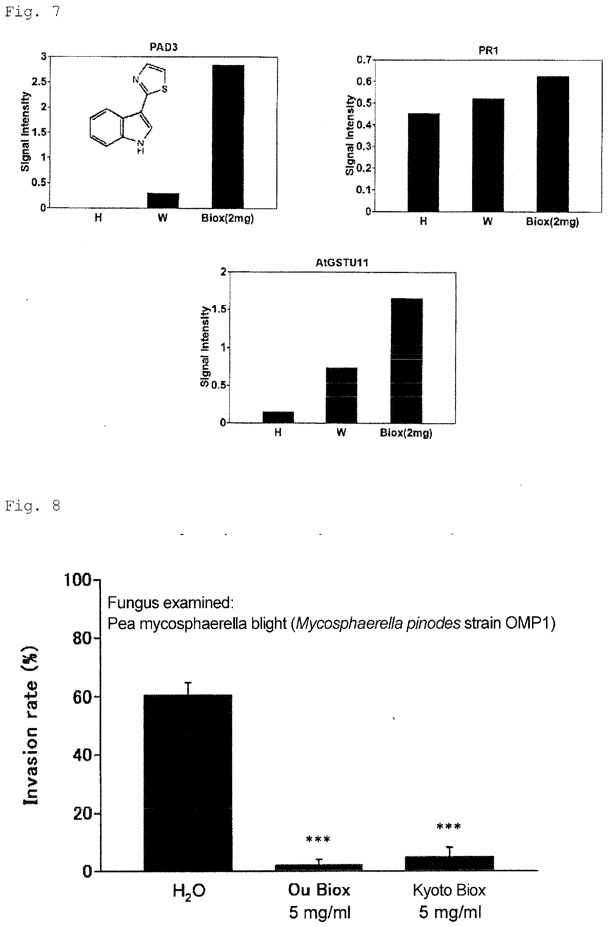

As shown above, it was found that OUMS1-BIOX had an activity of significantly preventing the invasive behavior of disease germs; however, the effect on plants was not clarified. Accordingly, the expression of protection-related genes in *Arabidopsis thaliana* Col-0 three hours after treatment with OUMS1-BIOX was analyzed by RT-PCR assay. OUMS1-BIOX (40 µl) prepared at 2 mg/ml was added to a leaf 6 weeks after seeding, and fixed with liquid nitrogen after 3 hours. Then, the total RNA was extracted by the TRIzol method (TRIzol reagent; Life Technologies). After an oligo-dT primer and nuclease-free water were added to the RNA (500 ng), thermal denaturation was performed by heating to 70°C for 10 minutes and then immediately cooling on ice. Subsequently, reverse transcriptase (Takara Bio Inc.), a reverse transcription buffer, and dNTP were added, and a reverse transcription reaction (42°C, 60 minutes) was performed, thereby obtaining cDNA. Using the obtained cDNA and the primers shown in Table 1, RT-PCR (Promega, GoTaq Green Master Mix) was performed to examine the expression level of each gene. Fig. 7 shows the results of the expression level of each gene.

The results demonstrated that the transcriptional activities of PAD3, which is involved in the biosynthesis of a low-molecular antimicrobial substance (phytoalexin), PR1, which is located downstream of the salicylic acid signal transduction system, and GSTU11, which is involved in the active oxygen producing system (scavenging system), were significantly increased (Fig. 7). Thus, it was revealed that OUMS1-BIOX also had an activity of inducing resistance to plants.

**Table 1. Primers used in the expression analysis of protection-related genes**

| Gene | AGI NO. | | Primer sequences (5'→ 3') | Size(bp) |
|---|---|---|---|---|
| AtJAZ7 | At2g34600 | F | GCTCGTTGGACGAATCAAGCAGC | 203 |
| AtJAZ7 | At2g34600 | R | TGTTGGAGGATCCGAACCGTCTG | 203 |
| AtJAZ10 | At5g13220 | F | TGAAGGTCGCTAATGAAGCAGC | 176 |
| AtJAZ10 | At5g13220 | R | TCTCTCCTTGCGCTTCTCGAGA | 176 |
| AtMYB15 | At3g23250 | F | AGGACCATGGACACCTGAAG | 239 |
| AtMYB15 | At3g23250 | R | CTGCAATCGCTGACCATCTA | 239 |
| AtMYC2 | At1g32640 | F | CGACGACAACGCTTCTATGA | 205 |
| AtMYC2 | At1g32640 | R | CCAACCTTCGTGTGTTCCTT | 205 |
| AtCOI1 | At2g39940 | F | ACATGGCGGTGTATGTCTCA | 208 |
| AtCOI1 | At2g39940 | R | GTTAAGCCGCCTTGTCTCAG | 208 |
| PDF1.2 | At5g44420 | F | TAAGTTTGCTTCCATCATCACCC | 208 |
| PDF1.2 | At5g44420 | R | GTGCTGGGAAGACATAGTTGCAT | 208 |
| JAR1 | At2g46370 | F | CACCGAAAGAGACCTTCAGC | 218 |
| JAR1 | At2g46370 | R | AACTAACGTAACCCGCATCG | 218 |
| NPR1 | At1g64280 | F | CAAGCCACTATGGCGGTTGAATG | 344 |
| NPR1 | At1g64280 | R | CTGAAAGGTGCTATCTTTACACCCG | 344 |
| PR1 | At4g07820 | F | CAGCCCCAAGACTACTTCAATGC | 394 |
| PR1 | At4g07820 | R | GGTCGTTCAATAAGAATGACAGACG | 394 |
| AtDIN11 | At3g49620 | F | GGCCAAACCAGTGGCCAGGA | 234 |
| AtDIN11 | At3g49620 | R | AGTCAGTGTGAGCTCCACATCCA | 234 |
| AtGSTU11 | At1g69930 | F | AGGAGCATGGCCTAGCCCTT | 230 |
| AtGSTU11 | At1g69930 | R | GGATGGGAGGACCGGAGAGCC | 230 |
| PAD3 | At3g26830 | F | AATCTCGCCGAAATGTATGG | 211 |
| PAD3 | At3g26830 | R | GCATCAGACTCCACTCGTCA | 211 |
| PAL2 | At3g53260 | F | GAGGCAGCGTTAAGGTTGAG | 197 |
| PAL2 | At3g53260 | R | TATTCCGGCGTTCAAAAATC | 197 |
| PER4 | At1g14540 | F | TCTCATCCGTCTCCATTTCC | 194 |
| PER4 | At1g14540 | R | TATCAGCGCAAGAAACAACG | 194 |
| EF-1a | At5g60390 | F | TGGTGACGCTGGTATGGTTA | 201 |
| EF-1a | At5g60390 | R | CATCATTTGGCACCCTTCTT | 201 |

### Test Example 5 (Action of Natural BIOX on Invasive Behavior of Disease Germs)

Although it was revealed that BIOX generated by *L*. *cholodnii* OUMS1 had an activity of preventing invasion of disease germ spores, whether natural BIOX derived from naturally occurring iron oxide-producing bacteria had the same activity was examined using BIOX obtained from a water purification tank placed in the Faculty of Agriculture at Okayama University, and BIOX obtained from a purification plant in Joyo City, Kyoto. These BIOXs are noted as Ou-Biox and Kyoto Biox. These natural BIOXs were prepared according to the methods disclosed in PTL 2 and PTL 3.

A mycosphaerella blight spore suspension (5 µl) was placed on an onion epidermal model, and an equivalent amount of water, Ou-Biox liquid, or Kyoto Biox liquid was added thereto. After being allowed to stand under moist-chamber conditions at 23°C for 27 hours, the resulting product was dyed with cotton blue, and observed by an optical microscope. Fig. 8 shows the invasion rate of the mycosphaerella blight fungus into onion epidermal cells (number of spores succeeded in invasion/number of spores forming appressoria x 100).

The results of observation revealed that the mycosphaerella blight (*Mycosphaerella pinodes*) spores in the water treatment control section formed appressoria immediately after germination, and promptly invaded the epidermal cells. In contrast, the spores in the presence of Ou-Biox or Kyoto Biox at 5 mg/ml formed appressoria immediately after germination; however, the invasion rate was significantly suppressed.

Similar effects were also observed in black spot *Alternaria alternata* conidia. It was clarified that the products from naturally occurring microorganisms (natural BIOXs) also had invasion inhibitory activity (Fig. 9).

### Example 1 (Spraying in Field)

OUMS1-BIOX (10 g) or BIOX (10 g) obtained from a water purification tank in the Faculty of Agriculture at Okayama University is suspended in 10 L of water and sufficiently mixed. The resulting mixture is placed in an atomizer, and sprayed on crop: *Brassica campestris* (14th day after seeding) under the following condition. As a result, an excellent effect of preventing gray mold and anthracnose is obtained.

Amount of water sprayed: equivalent to 1 L/25 m².

### Example 2 (Spraying in Field)

OUMS1-BIOX (10 g) or BIOX (10 g) obtained from a water purification tank in the Faculty of Agriculture at Okayama University is suspended in 10 L of water and sufficiently mixed. The resulting mixture is placed in an atomizer, and sprayed on crop: pea (28th day after seeding) under the following condition. As a result, an excellent effect of preventing mycosphaerella blight is obtained.

Amount of water sprayed: equivalent to 1 L/25 m².

### Example 3 (Spraying in Field)

OUMS1-BIOX (10 g) or BIOX (10 g) obtained from a water purification tank in the Faculty of Agriculture at Okayama University is suspended in 10 L of water and sufficiently mixed. The resulting mixture is placed in an atomizer, and sprayed on crop: cucumber (28th day after seeding) under the following condition. As a result, an excellent effect of preventing anthracnose is obtained.

Amount of water sprayed: equivalent to 1 L/25 m².

## Claims

1. A method for controlling plant diseases, comprising the step of applying a plant protection agent comprising an amorphous and/or microcrystalline silicon- and phosphorus-containing iron oxide, wherein the iron oxide is an iron oxide produced by an iron-oxidizing bacterium.

2. The control method according to claim 1, wherein the iron oxide comprises iron and oxygen as main components, and has an elemental ratio of iron, silicon, and phosphorus of 66-87:2-27:1-32 by atomic percent, with the proviso that the total of iron, silicon, and phosphorus by atomic percent is taken as 100.

3. The control method according to claim 1 or 2, wherein the iron oxide further comprises 0.1 to 5 wt.% of carbon.

4. The control method according to any one of claims 1 to 3, wherein the microcrystalline iron oxide is silicon- and phosphorus-containing ferrihydrite and/or lepidocrocite.

5. The control method according to any one of claims 1 to 4, wherein the iron oxide is an iron oxide separated from an aggregated precipitate produced in a water purification method using iron bacteria.

6. The control method according to any one of claims 1 to 5, wherein the iron-oxidizing bacterium is a bacterium belonging to *Leptothrix* sp. and/or *Gallionella* sp.

7. The control method according to any one of claims 1 to 5, wherein the iron-oxidizing bacterium is *Leptothrix cholodnii* OUMS1 (NITE BP-860).

8. The control method according to any one of claims 1 to 7, wherein the plant protection agent comprises a supernatant separated from a suspension of an iron oxide produced by an iron-oxidizing bacterium and water.

9. The control method according to any one of claims 1 to 8, wherein the plant protection agent has a wettable powder form.

10. The control method according to any one of claims 1 to 8, wherein the plant protection agent has a dusting powder form.

11. Use of an amorphous and/or microcrystalline silicon- and phosphorus-containing iron oxide as a plant protection agent, wherein the iron oxide is an iron oxide produced by an iron-oxidizing bacterium.

## Patentansprüche

1. Ein Verfahren zur Bekämpfung von Pflanzenkrankheiten, welches einen Schritt des Anwendens eines Pflanzenschutzmittels umfassend ein amorphes und/oder mikrokristallines silizium- und phosphorenthaltendes Eisenoxid umfasst, wobei das Eisenoxid ein durch ein eisenoxidierendes Bakterium hergestelltes Eisenoxid ist.

2. Das Verfahren zur Bekämpfung gemäß Anspruch 1, wobei das Eisenoxid Eisen und Sauerstoff als Hauptkomponenten umfasst und ein Elementarverhältnis von Eisen, Silizium und Phosphor von 66-87:2-27:1-32 nach Atomprozent aufweist, mit der Maßgabe, dass der Gesamtgehalt an Eisen, Silizium und Phosphor nach Atomprozent als 100 angenommen wird.

3. Das Verfahren zur Bekämpfung gemäß Anspruch 1 oder 2, wobei das Eisenoxid weiter 0,1 bis 5 Gew.-% Kohlenstoff umfasst.

4. Das Verfahren zur Bekämpfung gemäß einem der Ansprüche 1 bis 3, wobei das mikrokristalline Eisenoxid silizium- und phosphorenthaltendes Ferrihydrit und/oder Lepidokrokit ist.

5. Das Verfahren zur Bekämpfung gemäß einem der Ansprüche 1 bis 4, wobei das Eisenoxid ein Eisenoxid abgetrennt von einem aggregierten Niederschlag ist, welcher in einem Wasserreinigungsverfahren unter der Verwendung von Eisenbakterien hergestellt ist.

6. Das Verfahren zur Bekämpfung gemäß einem der Ansprüche 1 bis 5, wobei das eisenoxidierende Bakterium ein Bakterium zugehörig zu *Leptothrix-Sp.* und/oder *Gallionella-Sp.* ist.

7. Das Verfahren zur Bekämpfung gemäß einem der Ansprüche 1 bis 5, wobei das eisenoxidierende Bakterium *Leptothrix cholodnii* OUMS1 (NITE BP-860) ist.

8. Das Verfahren zur Bekämpfung gemäß einem der Ansprüche 1 bis 7, wobei das Pflanzenschutzmittel einen Überstand abgetrennt von einer Suspension eines Eisenoxids hergestellt durch ein eisenoxidierendes Bakterium und Wasser umfasst.

9. Das Verfahren zur Bekämpfung gemäß einem der Ansprüche 1 bis 8, wobei das Pflanzenschutzmittel in einer benetzbaren Pulverform vorliegt.

10. Das Verfahren zur Bekämpfung gemäß einem der Ansprüche 1 bis 8, wobei das Pflanzenschutzmittel in einer Puderform vorliegt.

11. Verwendung eines amorphen und/oder mikrokristallinen silizium- und phosphorenthaltenden Eisenoxids als ein Pflanzenschutzmittel, wobei das Eisenoxid ein durch ein eisenoxidierendes Bakterium hergestelltes Eisenoxid ist.

## Revendications

1. Méthode de lutte contre des maladies de plantes, comprenant l'étape d'application d'un agent phytoprotecteur comprenant un oxyde de fer amorphe et/ou microcristallin contenant du silicium et du phosphore, dans laquelle l'oxyde de fer est un oxyde de fer produit par une bactérie oxydant le fer.

2. Méthode de lutte selon la revendication 1, dans laquelle l'oxyde de fer comprend du fer et de l'oxygène à titre de composants principaux, et a un rapport élémentaire de fer, silicium et phosphore de 66-87:2-27:1-32 en pourcentage atomique, à condition que le total du fer, silicium et phosphore en pourcentage atomique représente 100.

3. Méthode de lutte selon la revendication 1 ou 2, dans laquelle l'oxyde de fer comprend en outre de 0,1 à 5 % en poids de carbone.

4. Méthode de lutte selon l'une quelconque des revendications 1 à 3, dans laquelle l'oxyde de fer microcristallin est une ferrihydrite et/ou lépidocrocite contenant du silicium et du phosphore.

5. Méthode de lutte selon l'une quelconque des revendications 1 à 4, dans laquelle l'oxyde de fer est un oxyde de fer séparé d'un précipité agrégé produit par une méthode de purification d'eau utilisant des ferrobactéries.

6. Méthode de lutte selon l'une quelconque des revendications 1 à 5, dans laquelle la bactérie oxydant le fer est une bactérie appartenant à *Leptothrix* sp. et/ou à *Gallionella* sp.

7. Méthode de lutte selon l'une quelconque des revendications 1 à 5, dans laquelle la bactérie oxydant le fer est *Leptothrix cholodnii* OUMS1 (NITE BP-860).

8. Méthode de lutte selon l'une quelconque des revendications 1 à 7, dans laquelle l'agent phytoprotecteur comprend un surnageant séparé à partir d'une suspension d'un oxyde de fer produit par une bactérie oxydant le fer et de l'eau.

9. Méthode de lutte selon l'une quelconque des revendications 1 à 8, dans laquelle l'agent phytoprotecteur est sous la forme d'une poudre mouillable.

10. Méthode de lutte selon l'une quelconque des revendications 1 à 8, dans laquelle l'agent phytoprotecteur est sous la forme d'une poudre à saupoudrer.

11. Utilisation d'un oxyde de fer amorphe et/ou microcristallin contenant du silicium et du phosphore en tant qu'agent phytoprotecteur, dans laquelle l'oxyde de fer est un oxyde de fer produit par une bactérie oxydant le fer.


### SEQUENCE LISTING

<110> NATIONAL UNIVERSITY CORPORATION OKAYAMA UNIVERSITY
<120> PLANT PROTECTION AGENT AND METHOD FOR PREVENTION OF PLANT DISEASES
<130> P14-014
<150> JP 2013-056674
   <151> 2013-03-19
<160> 30
<170> PatentIn version 3.4
<210> 1
   <211> 23
   <212> DNA
   <213> Artificial Sequence
<220>
   <223> primer
<400> 1
   gctcgttgga cgaatcaagc agc 23
<210> 2
   <211> 23
   <212> DNA
   <213> Artificial Sequence
<220>
   <223> primer
<400> 2
   tgttggagga tccgaaccgt ctg 23
<210> 3
   <211> 22
   <212> DNA
   <213> Artificial Sequence
<220>
   <223> primer
<400> 3
   tgaaggtcgc taatgaagca gc 22
<210> 4
   <211> 22
   <212> DNA
   <213> Artificial Sequence
<220>
   <223> primer
<400> 4
   tctctccttg cgcttctcga ga 22
<210> 5
   <211> 20
   <212> DNA
   <213> Artificial Sequence
<220>
   <223> primer
<400> 5
   aggaccatgg acacctgaag 20
<210> 6
   <211> 20
   <212> DNA
   <213> Artificial Sequence
<220>
   <223> primer
<400> 6
   ctgcaatcgc tgaccatcta 20
<210> 7
   <211> 20
   <212> DNA
   <213> Artificial Sequence
<220>
   <223> primer
<400> 7
   cgacgacaac gcttctatga 20
<210> 8
   <211> 20
   <212> DNA
   <213> Artificial Sequence
<220>
   <223> primer
<400> 8
   ccaaccttcg tgtgttcctt 20
<210> 9
   <211> 20
   <212> DNA
   <213> Artificial Sequence
<220>
   <223> primer
<400> 9
   acatggcggt gtatgtctca 20
<210> 10
   <211> 20
   <212> DNA
   <213> Artificial Sequence
<220>
   <223> primer
<400> 10
   gttaagccgc cttgtctcag 20
<210> 11
   <211> 23
   <212> DNA
   <213> Artificial Sequence
<220>
   <223> primer
<400> 11
   taagtttgct tccatcatca ccc 23
<210> 12
   <211> 23
   <212> DNA
   <213> Artificial Sequence
<220>
   <223> primer
<400> 12
   gtgctgggaa gacatagttg cat 23
<210> 13
   <211> 20
   <212> DNA
   <213> Artificial Sequence
<220>
   <223> primer
<400> 13
   caccgaaaga gaccttcagc 20
<210> 14
   <211> 20
   <212> DNA
   <213> Artificial Sequence
<220>
   <223> primer
<400> 14
   aactaacgta acccgcatcg 20
<210> 15
   <211> 23
   <212> DNA
   <213> Artificial Sequence
<220>
   <223> primer
<400> 15
   caagccacta tggcggttga atg 23
<210> 16
   <211> 25
   <212> DNA
   <213> Artificial Sequence
<220>
   <223> primer
<400> 16
   ctgaaaggtg ctatctttac acccg 25
<210> 17
   <211> 23
   <212> DNA
   <213> Artificial Sequence
<220>
   <223> primer
<400> 17
   cagccccaag actacttcaa tgc 23
<210> 18
   <211> 25
   <212> DNA
   <213> Artificial Sequence
<220>
   <223> primer
<400> 18
   ggtcgttcaa taagaatgac agacg 25
<210> 19
   <211> 20
   <212> DNA
   <213> Artificial Sequence
<220>
   <223> primer
<400> 19
   ggccaaacca gtggccagga 20
<210> 20
   <211> 23
   <212> DNA
   <213> Artificial Sequence
<220>
   <223> primer
<400> 20
   agtcagtgtg agctccacat cca 23
<210> 21
   <211> 20
   <212> DNA
   <213> Artificial Sequence
<220>
   <223> primer
<400> 21
   aggagcatgg cctagccctt 20
<210> 22
   <211> 21
   <212> DNA
   <213> Artificial Sequence
<220>
   <223> primer
<400> 22
   ggatgggagg accggagagc c 21
<210> 23
   <211> 20
   <212> DNA
   <213> Artificial Sequence
<220>
   <223> primer
<400> 23
   aatctcgccg aaatgtatgg 20
<210> 24
   <211> 20
   <212> DNA
   <213> Artificial Sequence
<220>
   <223> primer
<400> 24
   gcatcagact ccactcgtca 20
<210> 25
   <211> 20
   <212> DNA
   <213> Artificial Sequence
<220>
   <223> primer
<400> 25
   gaggcagcgt taaggttgag 20
<210> 26
   <211> 20
   <212> DNA
   <213> Artificial Sequence
<220>
   <223> primer
<400> 26
   tattccggcg ttcaaaaatc 20
<210> 27
   <211> 20
   <212> DNA
   <213> Artificial Sequence
<220>
   <223> primer
<400> 27
   tctcatccgt ctccatttcc 20
<210> 28
   <211> 20
   <212> DNA
   <213> Artificial Sequence
<220>
   <223> primer
<400> 28
   tatcagcgca agaaacaacg 20
<210> 29
   <211> 20
   <212> DNA
   <213> Artificial Sequence
<220>
   <223> primer
<400> 29
   tggtgacgct ggtatggtta 20
<210> 30
   <211> 20
   <212> DNA
   <213> Artificial Sequence
<220>
   <223> primer
<400> 30
   catcatttgg cacccttctt 20